(19) Europäisches Patentamt
European Patent Office
Office européen des brevets

(11) Veröffentlichungsnummer: **0 143 211**
**B1**

(12) **EUROPÄISCHE PATENTSCHRIFT**

(45) Veröffentlichungstag der Patentschrift: **19.09.90**

(51) Int. Cl.$^5$: **H 01 M 4/26**, C 02 F 1/70

(21) Anmeldenummer: **84110448.2**

(22) Anmeldetag: **03.09.84**

# (54) Verfahren zur Entfernung von Nitrat- und Nitridresten aus Ablaugen.

(30) Priorität: **28.11.83 DE 3342970**

(43) Veröffentlichungstag der Anmeldung:
**05.06.85 Patentblatt 85/23**

(45) Bekanntmachung des Hinweises auf die Patenterteilung:
**19.09.90 Patentblatt 90/38**

(84) Benannte Vertragsstaaten:
**DE FR GB SE**

(56) Entgegenhaltungen:
**EP-A-0 089 141**
**EP-A-0 096 759**
**DE-A-2 714 074**
**DE-B-1 806 703**
**DE-B-2 713 991**

(73) Patentinhaber: **VARTA Batterie Aktiengesellschaft**
**Am Leineufer 51**
**D-3000 Hannover 21 (DE)**

(72) Erfinder: **Winsel, August, Prof. Dr.**
**Fasanenstrasse 8a**
**D-6233 Kelkheim (DE)**

(74) Vertreter: **Kaiser, Dieter Ralf, Dipl.-Ing.**
**Gundelhardtstrasse 72**
**D-6233 Kelkheim/Ts. (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft ein Verfahren zur Entfernung von Nitrat- und Nitridresten aus Ablaugen und industriellen Abwässern, insbesondere aus bei der Sinterelektrodenherstellung für alkalische Akkumulatoren anfallenden Fällaugen, nach dem Prinzip, daß in Gegenwart eines Katalysatormaterials, welches bei Elektroden in Brennstoffzellen die elektrochemische Oxidation von Wasserstoff bewirkt, der Abwasser-Lösung ein Reduktionsmittel zugegeben wird, das im Redoxsystem Reduktionsmittel/Oxidationsprodukt des Reduktionsmittels ein Redoxpotential aufweist, das negativer liegt als das Redoxpotential des Redoxsystems Verunreinigung/Reduktionsprodukt der Verunreinigung.

In der industriellen Fertigung ist es kaum noch vertretbar, die bei zahlreichen naßchemischen Prozessen anfallenden Brauchwässer und Ablaugen ohne weitere Ausnutzung zu verwerfen. Entweder zwingen wertvolle Inhaltstoffe oder ein hoher Verunreinigungsgrad dazu, die Abwässer so aufzubereiten, daß sie erneut, wenn möglich mehrere Male, den Prozeß durchlaufen können.

Bei der Herstellung positiver Sinterelektroden werden Ni-Sinterplatten in eine $Ni(NO_3)_2$-Lösung hoher Konzentration getaucht, um die Poren damit zu füllen, und anschließend wird mit konzentrierter NaOH-Lösung $Ni(OH)_2$ in den Poren gefällt. Daneben entsteht $NaNO_3$ als Umsetzungsprodukt, welches mit wachsender Konzentration nicht nur innerhalb der Sinterelektrode, sondern auch in der Fällauge als Verunreinigung unerwünscht ist. Wegen dieses Umstandes kann die Fällauge nur zu etwa 50% ausgenutzt werden. Was die Nitratentfernung aus den Poren der Platten selbst anbelangt, so ist es z.B. aus der DE—PS 26 31 839 bereits bekannt, daß das Nitrat bis zum Nitrid reduziert werden kann und schließlich als gasförmiges Ammoniak entweicht, wenn man der positiven Elektrode zu Beginn der Vorformation durch Umpolung ein negatives Potential aufgeprägt, welches demjenigen der reversiblen $Ni/Ni(OH)_2$-Elektrode entspricht. Dieses liegt unter Standardbedingungen (pH 14) bei −660 mV und ist damit um ca. 170 mV positiver als das Potential der $nH_2$-Elektrode in gleicher Lösung (−828 mV).

Die Fällauge bleibt indessen mit einem erheblichen Gehalt an $NaNO_3$ belastet, und ihre Wirkung ist bei erneuter Wiederverwendung bereits bedeutend abgeschwächt.

Am Beispiel der Entgiftung chromathaltiger Lösungen durch katalytische Reduktion der Chrom (VI)—zu Chrom (III)-Ionen und Ausfällen der letzteren als Chromhydroxid zeigt schließlich die DE—AS 27 14 074 eine Möglichkeit der chemischen Beseitigung von Schadstoffen bzw. Verunreinigungen auf. Sie besteht im Prinzip darin, daß man die wässrige Lösung des zu entfernenden Stoffes mit einem Reduktionsmittel versetzt, welches mit einem Oxidationsprodukt ein Redoxsystem Reduktionsmittel/Oxidationsprodukt des Reduktionsmittels bildet, dessen Redoxpotential negativer als das Redoxpotential des Redoxsystems Verunreinigung/Reduktionsprodukt der Verunreinigung ist.

Der Erfindung liegt die Aufgabe zugrunde, ein Verfahren anzugeben, die Lauge durch Entfernung der Nitrationen weitmöglichst zu regenerieren und nach dem gleichen Verfahrensprinzip auch andere industrielle Abwässer einer Reinigung insbesondere von Nitraten zugänglich zu machen.

Die Aufgabe wird erfindungsgemäß mittels der in den Ansprüchen 1 und 3 genannten Maßnahmen gelöst.

Mit großem Vorteil gegenüber der elektrolytischen Nitratzersetzung läßt sich das Natriumnitrat an gleichartigen $H_2$-Elektroden auch unmittelbar katalytisch ohne Zuführung von Strom zu Natriumhydroxid und Ammoniak reduzieren, wobei man lediglich die nitrathaltige Lösung einem von den elektrolytseitigen Oberflächen der Wasserstoffelektroden gebildeten Raum zuführt und die Elektroden rückseitig mit Wasserstoff versorgt.

Der Vorteil des erfindungsgemäßen Verfahrens soll im folgenden durch einen Vergleich der Energiebilanzen der fraglichen Reaktionen dargelegt werden. Die katalytische Reaktion (erfindungsgemäß) ist in der Formel (1), die elektrochemische Reaktion in der Formel (2) wiedergegeben:

$$NaNO_3+4H_2=NH_3+NaOH+2H_2O \quad (8e^-) \qquad (1)$$

$$NaNO_3+2H_2O=NH_3+NaOH+2O_2 \quad (8e^-) \qquad (2)$$

Der Unterschied zwischen beiden Reaktionen ist der, daß im ersten Fall $H_2$ verbraucht wird, welcher der $H_2$-Elektrode zugeführt werden muß, während im zweiten Fall $H_2$ durch eine Wasserzersetzungsreaktion in situ erzeugt wird, daß aber bei dieser Reaktion $O_2$ in Freiheit gesetzt wird.

Bei der katalytischen Reaktion wird die zu hydrierende Lösung vorzugsweise einem Raum zwischen zwei gleichartigen $H_2$-Elektroden zugeführt, die auf der Rückseite mit Wasserstoff versorgt werden. Im Falle der elektrochemischen Reduktion erfolgt dieser Vorgang an der kathode einer Elektrolysezelle, bei der an der Gegenelektrode Sauerstoff anodisch abgeschieden wird. Zur Durchführung des Vorganges (2) muß elektrische Energie aufgewendet werden. Es läßt sich berechnen, daß die katalytische Reaktion (1) exotherm, d.h. unter Entwicklung von Wärme erfolgt, die aus dem Kreislauf der zu hydrierenden Lösung abgeführt werden muß. Dagegen ist die elektrochemische Reaktion (2) endotherm. Von der bereitzustellenden elektrischen Energie abgesehen kommen hier noch die irreversiblen Wärmeanteile, die durch Polarisation entstehen, hinzu. Außerdem ist in diesem Fall an der $O_2$-Abscheidungselektrode eine Rückreaktion des Ammoniaks unter Bildung von Nitrid bzw. Nitrat zu beobachten, die einen nicht zu vernachlässigenden Anteil der Gesamtreaktion ausmacht und ebenfalls zur Wärmeentwicklung innerhalb der Zelle beträgt.

In der nachstehenden Tabelle 1 sind für die Reaktanden der Reaktionen (1) und (2) die Standardwerte der Bildungsenthalpie ΔH und der freien Bildungsenthalpie ΔG aus Chemical Engineer Handbook zusammengetragen. aq 400 deutet darauf hin, daß es sich jeweils um die Enthalpiewerte in Lösung handelt.

TABELLE 1:
Standardbildungsenergien

| | ΔH (kcal/mol), [kJ/mol] | ΔG (kcal/mol), [kJ/mol] |
|---|---|---|
| $NaNO_3$ | −106,880 [−446,758] | −88,840 [−341,351] aq 400 |
| $NH_3$ | −10,760 [−44,977] | −3,906 [−16,327] |
| NaOH | −112,193 [−468,967] | −100,180 [−418,752] aq 400 |
| $H_2O$ | −68,320 [−285,578] | −56,690 [−236,964] |
| $NH_4OH$ | −87,590 [−366,126] | |
| $KNO_3$ | −109,790 [−458,922] | −93,680 [−391,982] aq 400 |
| KOH | −114,960 [−480,533] | −105,000 [−438,900] aq 400 |

Die mit Hilfe dieser Zahlenwerte nach Gleichung (1) bzw. Gleichung (2) errechneten Reaktionsenthalpien $\Delta H_R$ und freien Reaktionsenthalpien $\Delta G_R$ sind in Tabelle 2 aufgeführt. Da in den Gleichungen (1) und (2) Na gegen K austauschbar ist, wurde in Tabelle 2 auch der Fall berücksichtigt, daß für die Regenerierung Kaliumhydroxidlösung benutzt wird. Ebenfalls eingetragen sind die äquivalenten Spannungswerte, die sich aus den Enthalpie- bzw. freien Enthalpiewerten ergebnen, wenn man sie durch 8F dividiert, wobei F die Faradaysche Konstante von 96.500 Asec (C) ist und 8 die Wertigkeit der Reduktionsreaktion des Nitrats zum Ammoniak darstellt. Das Minuszeichen bei den Energiewerten bedeutet, daß Energie frei wird bei der Reaktion, wohingegen ein positives Vorzeichen bedeutet, daß dem System für die Reaktion Energie zugeführt werden muß.

TABELLE 2:
Reaktionsenergiewerte für die katalytische (1) und elektrochemische (2) Nitratreduktion

| | Enthalpie $\Delta H_R$ | | |
|---|---|---|---|
| Reaktion | (kcal/mol) [kJ/mol] | (kWh/mol) | Äquivalente Spannung $U_H=-\Delta H_R/8F$ (V) |
| NaOH (1) | −152,7 [−638,3] | −0,178 | 0,830 |
| NaOH (2) | 120,6 [504,1] | 0,140 | −0,653 |
| KOH (1) | −152,7 [−638,3] | −0,178 | 0,830 |
| KOH (2) | 120,7 [504,5] | 0,140 | −0,653 |

| | Freie Enthalpie $\Delta G_R$ | | |
|---|---|---|---|
| Reaktion | (kcal/mol) | (kWh/mol) | Äquivalente Spannung $U_G=-\Delta G_R/8F$ (V) |
| NaOH (1) | −128,6 [−537,5] | −0,150 | 0,699 |
| NaOH (2) | 98,13 [410,2] | 0,144 | −0,532 |
| KOH (1) | −128,6 [−537,5] | −0,149 | 0,695 |
| KOH (2) | 98,15 [410,3] | 0,114 | −0,532 |

Betrachtet man nunmehr die äquivalente Spannung $U_G$=0,699 V nach Reaktion (1), so its diese gleichbedeutend mit der reversiblen Spannung eine Zelle, deren negative Elektrode die reversible $H_2$-Elektrode und deren positive Elektrode eine Nitrat/Sauerstoff-Elektrode ist. Würde man demnach die katalytische Reaktion nicht im Kurzschluß durchführen—erfindungsgemäß verläuft sie praktisch im Rahmen eines Kurzschlußelements, bei dem die gesamte Spannung von 0,7 V als treibende Spannung des

Kurzschlußstromes vernichtet wird—so könnte man aus der Nitratreduktion mit Wasserstoff noch elektrische Energie gewinnen.

Im Gegensatz dazu würde eine Zelle, die an der negativen Elektrode das Nitrat reversibel reduziert und an der positiven Elektrode reversible Sauerstoff abscheidet, zum Ablauf der gewünschten Reaktion eine Spannung von $U_G=0{,}532$ V (siehe Tab. 2) für den von außen aufgezwungenen Elektrolysestrom erfordern. Im Kurzschluß würde diese Zelle Sauerstoff und Ammoniak unter Bildung von Nitrat verbrauchen, d.h. die Reaktion kann aus eigener Kraft nur in der ungewünschten Richtung erfolgen. Allerdings liegen die praktisch erforderlichen Spannungen zur Durchführung der Reaktion 2 in der gewünschten Richtung noch wesentlich höher als durch $U_H=-0{,}653$ V gegeben ist. Denn die Nitratreduktion erfolgt auch in diesem Fall in der Nähe des $H_2$-Potentials, während $O_2$-Entwicklung je nach katalytischer Aktivität der Elektroden für diesen Vorgang eine Spannung von 1,6—2 V Gegen die $H_2$-Elektrode erfordert. Die überschüssige Spannung wird zur Überwindung der Irreversibilität der $O_2$-Elektrode verbraucht. Ferner treten Spannungsverluste und damit Wärmeproduktion an den elektrolytischen Ausbreitungswiderständen und an den Kontaktwiderständen auf. Man kann sogar erwarten, daß die Wärmeproduktion pro Formelumsatz in den Elektrolysezellen etwa um den Faktor 2—3 größer ist als in der katalytischen Zelle.

Die katalytische Regenerier-Anordnung hat den Vorteil, daß sie keine Stromkontakte braucht und aus nur gleichartigen Elektroden besteht. Auch unter Vernachlässigung der Rückreaktion an der positiven Elektrode der elektrochemischen Zelle kann in einer nur aus Wasserstoffelektroden bestehenden Zelle die äquivalente katalytische Stromdichte die Hälfte der in der Elektrolysezelle ausmachen, um dennoch ein gleich gutes Ergebnis der Umsetzung pro Volumeneinheit zu erzielen.

Für die praktische Durchführung des erfindungsgemäßen Verfahrens ist es vorteilhaft, Wasserstoffelektroden aus einem porösen Folienmaterial einzusetzen, welches durch Zusammenwalzen einer Trockenmischung aus Polytetrafluoräthylen (PTFE) und Raneynickelpulver (als Katalysator) mit einem Metallgewebenetz gebildet ist. Die Herstellung dieses Folienmaterials erfolgt in einem speziellen Mischer. Bei diesem Mischer rotieren Schaufeln die, an den gegenüberliegenden Enden einer motorgetriebenen Welle befestigt sind, mit einer Geschwindigkeit von ca. 80 U/min in zwei parallelen Ebenen innerhalb eines liegenden zylindrischen Gehäuses, dessen Zylinderachse mit der Schaufelwelle zusammenfällt. Eine zweite motorgetriebene Welle, die senkrecht zur Schaufelwelle und zwischen den Rotationsebenen der Schaufeln angeordnet ist, trägt einen Schneidkopf aus scharfen Messern und rotiert mit extrem hoher Geschwindigkeit. Die Messer können dabei eine Umfangsgeschwindigkeit von ca. 25 m/sec oder mehr erreichen, wenn man davon ausgeht, daß sie einen Durchmesser bzw. eine Länge von ca. 150 mm besitzen und die Tourenzahl des Motors ca. 3000 U/min beträgt.

Diesem Schaufelmischer werden Raneynickelpulver, das gegen Luftoxidation konserviert ist, und PTFE etwa im Gewichtsverhältnis 20:1 zugeführt. Während des Mischvorganges ist das Mischgut zusätzlich der intensiven Zerteilungswirkung der schnell rotierenden scharfen Messer ausgesetzt, wodurch insbesondere die noch vorhandenen PTFE-Agglomerate zu feinsten Partikeln zerschlagen werden.

Die Weiterverarbeitung bis zur netzarmierten Folie, die ca. 0,2 mm dick ist, verläuft anschließend in zwei Walzschritten. Durch Komplettierung mit einer einseitig aufgewalzten porösen und hydrophobierenden PTFE-Schicht, die gasseitige Oberfläche bildend, erreicht die erfindungsgemäß eingesetzte Wasserstoffelektrode eine Gesamtdicke von ca. 0,5 mm und ein Gesamtgewicht von 1,95 $kg/m^2$, von dem etwa 0,32 $kg/m^2$ auf die PTFE-Schicht, 1,18 $kg/cm^2$ auf die PTFE-gebundene Raneynickelschicht und 0,45 $kg/m^2$ auf das Nickelgewebenetz entfallen.

In der Figur ist eine Vorrichtung zur Durchführung des erfindungsgemäßen Verfahrens schematisch dargestellt.

In einer Reaktionszelle 1 sind jeweils zwei $H_2$-Elektroden 2 gasseitig zusammengeschlossen, so daß sie einen $H_2$-Raum 3 bilden, während die elektrolytseitigen Oberflächen zweier Elektroden 2 einen von der Regenerierungslösung ($NaOH+NaNO_3$) durchflossenen Raum 4 bilden. Die Regenerierungslösung passiert vom Zulauf 5 kommend die Reaktionszelle und verläßt die Anordnung nach Befreiung von mitgeführtem $NH_3$ im Ammoniakabscheider 7 über den Ablauf 6 oder wird mittels Pumpe 8 im Sinne der Richtungspfeile im Kreis durch die Reaktionszelle geführt. Gleichzeitig werden die Wasserstoffelektroden von der $H_2$-Zuführung 9 her mittels Pumpe 10 im Kreislauf versorgt, wobei jedoch ein Teil des Wasserstoff über Pumpe 11 zwecks Austreibung des Ammoniaks aus der Regenerierungslösung an den Ammoniakabscheider 7 abgezweigt wird. Das ausgetriebene Ammoniak kann mit Vorteil einem Ammoniakspalter 12 (nicht näher dargestellt) zugeführt werden, der dann den Wasserstoff zur Durchführung des Verfahrens liefert. Allerdings wäre dieser Wasserstoff mit dem Spaltprodukt $N_2$ verunreinigt. Seine Beseitigung aus dem $H_2$-Kreislauf des selbst den $H_2$ selektiv verbrauchenden Hydrierungsreaktors ist jedoch mit Hilfe von $H_2/H_2$-Zellen oder kältetechnisch einfach zu bewerkstelligen.

**Patentansprüche**

1. Verfahren zur Entfernung von Nitrat- und Nitridresten aus Ablaugen und industriellen Abwässern, insbesondere aus bei der Sinterelektrodenherstellung für alkalische Akkumulatoren anfallenden Fällaugen, bei dem in Gegenwart eines Katalysatormaterials, welches bei Elektroden in Brennstoffzellen die elektrochemische Oxidation von Wasserstoff bewirkt, der Abwasser-Lösung ein Reduktionsmittel zugegeben wird, das im Redoxsystem Reduktionsmittel/Oxidationsprodukt des Reduktionsmittels ein

Redoxpotential aufweist, das negativer liegt als das Redoxpotential des Redoxsystems Verunreinigung/ Reduktionsprodukt der Verunreinigung, dadurch gekennzeichnet, daß die zu regenerierende nitrathaltige Lösung einem spaltförmigen Raum zugeführt wird, der ein- oder beidseitig von den Elektrolytseiten zweier Wasserstoffelektroden begrenzt wird, während die Elektroden von der Rückseite oder von den Rändern her mit Wasserstoffgas versorgt werden.

2. Verfahren nach Anspruch 1, dadurch gekennzeichnet, daß die Wasserstoffelektroden aus einem porösen Folienmaterial bestehen, welches durch Zusammenwalzen einer Trockenmischung aus Polytetrafluoräthylen und Raneynickelpulver mit einem Metallgewebenetz gebildet ist.

3. Vorrichtung zur Durchführung des Verfahrens nach den Ansprüchen 1 und 2, dadurch gekennzeichnet, daß in einer Reaktionszelle (1) mit aneinandergereihten porösen Wasserstoffelektroden jeweils zwei Elektroden (2) gasseitig zusammengeschlossen einen $H_2$-Raum (3) bilden, während die elektrolytseitigen Oberflächen zweier Elektroden einen von der Regenerierungslösung durchflossenen Raum (4) bilden, daß Pumpen (8, 10) für eine Bewegung der Regenerierungslösung bzw. des Wasserstoffs durch diese Räume im Kreislauf vorhanden sind, daß in den Kreislauf der Regenerierungslösung ein Ammoniakabscheider (7) eingeschaltet ist, dem ein Teil des die Reaktionszelle durchströmenden Wasserstoffs mittels einer Pumpe (11) zwecks Austreibung des Ammoniaks zuführbar ist, und daß gegebenenfalls dem Ammoniakabscheider ein Ammoniakspalter (12) mit einer Rückleitung in den Wasserstoffkreislauf, die Einrichtungen zur Beseitigung von Stickstoff besitzt, nachgeordnet ist.

## Revendications

1. Procédé pour l'élimination de nitrates et nitrures de liqueurs résiduaires et eaux usées industrielles, en particulier de liqueurs de précipitation provenant de la fabrication d'électrodes frittées pour accumulateurs électriques où, en présence d'un matériau de catalyseur qui effectue, dans le cas d'électrodes dans des cellules de combustibles, l'oxydation électrochimique de l'hydrogène, la solution d'eaux usées est additionnée d'un agent réducteur qui présente, dans le système rédox agent réducteur/ produit d'oxydation de l'agent réducteur, un potential rédox qui est plus négatif que le potentiel rédox du système rédox impureté/produit de réduction de l'impureté, caractérisé en ce que la solution contenant des nitrates à régénérer est conduite à un espace en forme de fente qui est délimité d'un ou des deux côtés par les côtés électrolyte de deux électrodes à hydrogène tandis que les électrodes sont alimentées, de l'arrière ou par les côtés, en hydrogène gazeux.

2. Procédé selon la revendication 1, caractérisé en ce que les électrodes à hydrogène se composent d'un matériau en feuile poreuse qui est formé en calandrant ensemble un mélange sec de polytétrafluoroéthylène et de poudre de nickel de Raney avec un filet tissé en métal.

3. Dispositif pour la mise en oeuvre du procédé selon les revendications 1 et 2, caractérisé en ce que dans une cellules de réaction (1) avec électrodes poreuses adjacentes à hydrogène, deux électrodes (2) sont raccordées côté gaz d'un espace (3) de $H_2$, tandis que les surfaces côté électrolyte des deux électrodes forment un espace (4) traversé par la solution de régénération, en ce que des pompes (8, 10) sont présentes pour un mouvement de la solution de régénération, respectivement, de l'hydrogène à travers cet espace, en ce que dans le circuit de la solution de régénération, est inséré un filtre d'ammoniac (7) auquel peut être fournie une partie de l'hydrogène traversant la cellule de réaction au moyen d'une pompe (11) en vue de le débarrasser de l'ammoniac et en ce que le cas échéant le filtre d'ammoniac est suivi d'un diviseur d'ammoniac (12) avec une conduite de retour dans le circuit d'hydrogène, qui possède des systèmes pour l'élimination de l'azote.

## Claims

1. Process for removing nitrate and nitride residues from waste liquors and industrial waste waters, in particular from precipitated liquors occurring in the production of sintered electrodes for alkaline accumulators, in which, in the presence of a catalyst material which brings about the electrochemical oxidation of hydrogen in electrodes in fuel cells, there is added to the waste water solution a reductant which has a redox potential in the redox system reductant/oxidation product of the reductant which is more negative than the redox potential of the redox system impurity/reduction product of the impurity, characterized in that the nitrate-containing solution to be regenerated is supplied to a gap-shaped space which is delimited on one or both sides by the electrolyte sides of two hydrogen electrodes, while the electrodes are supplied with hydrogen gas from the rear or from the edges.

2. Process according to Claim 1, characterized in that the hydrogen electrodes comprise a porous film material which is formed by milling together a dry mixture of polytetrafluoroethylene and Raney nickel powder with a metal netting.

3. Apparatus for carrying out the process according to Claims 1 and 2, characterized in that, in a reaction cell (1) having porous hydrogen electrodes arranged in rows, in each case two electrodes (2) joined together on the gas side form an $H_2$ space (3), while the surfaces on the electrolyte side of two electrodes form a space (4) through which the regenerant solution flows, in that pumps (8, 10) are provided

for cycling the regenerant solution or the hydrogen through these spaces, in that an ammonia collector (7) is placed in the cycle of regenerant solution and part of the hydrogen flowing through the reaction cell can be supplied to it by means of a pump (11) for the purposes of expelling ammonia, and in that where appropriate there is downstream of the ammonia collector an ammonia dissociation means (12) having a return line to the hydrogen cycle which has means of eliminating nitrogen.

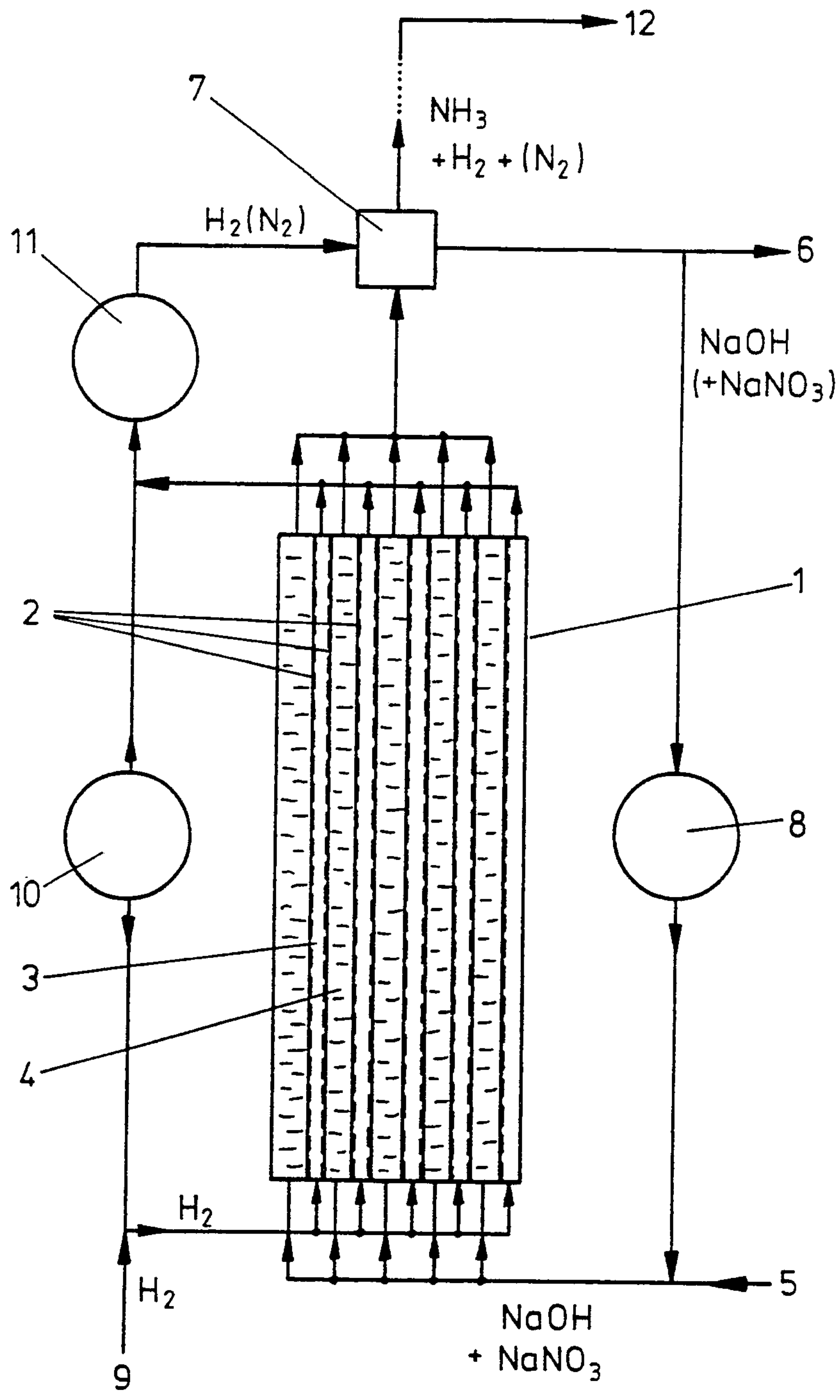
12
7
$NH_3$
$+H_2+(N_2)$
11
$H_2(N_2)$
6
NaOH
$(+NaNO_3)$
1
2
8
10
3
4
$H_2$
$H_2$
5
NaOH
$+ NaNO_3$
9